(19) Europäisches Patentamt
European Patent Office
Office européen des brevets

(11) **EP 1 853 425 B1**

(12) # EUROPEAN PATENT SPECIFICATION

(45) Date of publication and mention of the grant of the patent:
**17.11.2010 Bulletin 2010/46**

(21) Application number: **06721146.6**

(22) Date of filing: **02.03.2006**

(51) Int Cl.:
***B32B 27/30*** *(2006.01)* ***C08L 33/06*** *(2006.01)*
***C08L 33/14*** *(2006.01)*

(86) International application number:
**PCT/US2006/007550**

(87) International publication number:
**WO 2006/094177 (08.09.2006 Gazette 2006/36)**

(54) **(METH)ACRYLIC FILM, AND MARKING FILM AND RECEPTOR SHEET USING THE SAME**

(METH)ACRYLFOLIE UND DIESE VERWENDENDE MARKIERFOLIE UND DIESE VERWENDENDE EMPFANGSBAHN

FILM (METH)ACRYLIQUE, FILM DE MARQUAGE ET FEUILLE RECEPTRICE L'UTILISANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.03.2005 JP 2005057332**

(43) Date of publication of application:
**14.11.2007 Bulletin 2007/46**

(73) Proprietor: **3M Innovative Properties Company**
**St. Paul, MN 55133-3427 (US)**

(72) Inventors:
- **TAKAMATSU, Yorinobu**
  **Tokyo 158-8583 (JP)**
- **SAKAGUCHI, Hiroshi**
  **Tokyo 158-8583 (JP)**
- **ABE, Hidetoshi**
  **Tokyo 158-8583 (JP)**

(74) Representative: **Vossius & Partner**
**Siebertstrasse 4**
**81675 München (DE)**

(56) References cited:
**WO-A-2005/023913** **US-A- 4 045 517**
**US-A1- 2004 202 879** **US-B1- 6 448 339**

EP 1 853 425 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The present invention relates to a marking film as defined the claims. It comprises an acrylic or methacrylic film (hereinafter referred to as a (meth)acrylic film) having excellent elongation characteristics, high tensile strength at low temperature, and excellent solvent resistance. The film of the present invention can be used as a base material of an adhesive coated product in interior and exterior materials for buildings, facing materials for furniture, and interior and exterior materials for vehicles because it has the above-mentioned characteristics, and is also useful as a substitute for a polyvinyl chloride based film because it is free from halogen.

### Background

As described above, a polyvinyl chloride based film having good balance between the tensile strength and elongation characteristics has hitherto been used as the facing film. However, hydrogen chloride gas sometimes evolve during incineration of polyvinyl chloride based films, and therefore a desire exists to replace such films with films based on resins free from chlorine.

An acrylic resin has been employed to solve this problem. For example, a decorative sheet comprising a base film made of an acrylic resin and a protective layer made of an acrylic resin laminated on the surface of the base film and decorative sheet comprising a base film made of an olefinic resin and a protective layer made of an acrylic resin laminated on the surface of the base film are disclosed.

In case the acrylic resin is formed into a film, the resulting film is generally not fit for use as a decorative sheet because it is rigid and brittle. To improve brittleness of the acrylic resin and to impart flexibility to the acrylic resin, a rubber component such as acrylic rubber particles is generally mixed and various techniques are proposed.

For example, there is disclosed an acrylic resin composition comprising (A) 20 to 98 parts by weight of a rigid thermoplastic acrylic resin obtained by polymerizing a monomer composed mainly of methyl methacrylate and (B) 2 to 80 parts by weight of polymer particles having a multi-layered structure, which is excellent in impact resistance (see Japanese Examined Patent Publication (Kokoku) No. 60-17406 and Japanese Examined Patent Publication (Kokoku) No. 60-30698). The polymer particles have a three-layered structure comprising: (I) a first layer formed of a rigid polymer obtained by emulsion polymerization of a monomer composed mainly of methyl methacrylate having Tg of 25°C or higher, (II) a second layer formed by polymerizing a monomer mixture comprising 45 to 99.99% by weight of an alkyl acrylate having $C_{1-8}$ alkyl group, which has Tg of 25°C or lower, 0.1 to 10% by weight of a poly functional grafting agent such as allyl (meth)acrylate, 5% by weight or less of a poly functional crosslinking agent such as dimethacrylate and 40% by weight or less of the other copolymerizable monomer, and (III) a third layer formed by polymerizing a monomer composed mainly of methyl methacrylate having Tg of 25°C or higher in the presence of the second layer, the polymer particles having a particle diameter of 200 to 900 Å, wherein the first layer accounts for 5 to 30% by weight of the multi-layer structure, the second layer accounts for 40 to 85% by weight of the multi-layer structure, and the third layer accounts for 10 to 30% by weight of the multi-layer structure.

However, these acrylic resins could not reconcile high tensile strength and elongation characteristics.

A resin obtained by adding an acrylic polymer having an amino group to an acrylic polymer having a carboxyl group has been disclosed (see Japanese Unexamined Patent Publication (Kokai) No. 10-310754). Japanese Unexamined Patent Publication (Kokai) No. 10-310754 discloses an adhesive composition obtained by adding (2) 1 to 40% by weight of a resin composition having Tg of 40°C or higher and a weight-average molecular weight of 100,000 or less obtained by copolymerizing one or more kinds of monomers selected from alkyl methacrylate having 1 to 20 carbon atoms, cycloalkyl methacrylate, benzyl methacrylate and styrene as a main component with 0.5 to 10% by weight of an amino group-containing monomer to (1) 100 parts by weight of a resin composition having a weight-average molecular weight of 80,000 or more obtained by copolymerizing an alkyl (meth)acrylate having 1 to 12 carbon atoms as a main component with 0.5 to 10% by weight of a carboxyl group-containing monomer. However, this composition is an adhesive and is insufficient in tensile strength when used as a film.

There is also disclosed an acrylic resin composition in which characteristics are improved by crosslinking using a radiation polymerizable compound or a radiation activated crosslinking agent. For example, Kohyo (National Publication of Translated Version) No. 2000-509089 discloses a method for radiation crosslinking of a polymer using a radiation activated crosslinking agent such as acrylate benzophenone, and a radiation crosslinking composition. However, the polymer crosslinked only by ultraviolet light could not reconcile high tensile strength and elongation characteristics. Japanese Unexamined Patent Publication (Kokai) No. 62-153376 discloses a radiation curable adhesive comprising an adhesive and a urethane acrylate oligomer having a molecular weight of 3,000 to 10,000 as a radiation polymerizable compound, and Japanese Examined Patent Publication (Kokoku) No. 58-50164 discloses a radiation curable adhesive comprising an adhesive and a polyfunctional acrylic monomer as a radiation polymerizable compound. However, these compositions are adhesives and are insufficient in tensile strength when used as a film.

There is also disclosed an acrylic resin composition in which characteristics are improved by crosslinking via an isocyanate. For example, Japanese Unexamined Patent Publication (Kokai) No. 2001-213932 discloses a resin composition comprising:

(A) an acrylic polymer having two or more functional groups capable of reacting with an isocyanate,
(B) at least one compound having two or more functional groups capable of reacting with an isocyanate, selected from polyether, polyester, polycarbonate and polybutadiene, and
(C) a polyisocyanate having two or more isocyanate groups. However, the resin composition could not reconcile high tensile strength and elongation characteristics.

Summary

The present invention has been made to solve the problems described above and to provide a film having high tensile strength and elongation characteristics, using an acrylic polymer.

The present invention is directed to a marking film as defined in claim 1. The (meth)acrylic film is formed of an acidic group-containing (meth)acrylic polymer having a glass transition temperature (Tg) of 0°C or higher obtained by copolymerizing a composition containing a monoethylenically unsaturated monomer as a main component and an unsaturated monomer having an acidic group; a basic group-containing (meth)acrylic polymer having a glass transition temperature (Tg) of 0°C or lower obtained by copolymerizing a composition containing a monoethylenically unsaturated monomer as a main component and an unsaturated monomer having a basic group, and a compound containing a radical generating group.

In certain embodiments the compound containing a radical generating group is copolymerized to the acidic group-containing (meth)acrylic polymer, the basic group-containing (meth)acrylic polymer or both.

The present invention is also directed to a marking film as defined in claim 3. The (meth)acrylic film is formed of an acidic group-containing (meth)acrylic polymer having a glass transition temperature (Tg) of 0°C or lower obtained by copolymerizing a composition containing a monoethylenically unsaturated monomer as a main component and an unsaturated monomer having an acidic group; a basic group-containing (meth)acrylic polymer having a glass transition temperature (Tg) of 0°C or higher obtained by copolymerizing a composition containing a monoethylenically unsaturated monomer as a main component and an unsaturated monomer having a basic group, and a compound containing a radical generating group.

In certain embodiments the compound containing a radical generating group is copolymerized to the acidic group-containing (meth)acrylic polymer, the basic group-containing (meth)acrylic polymer or both.

In certain embodiments the radical generating group is a photosensitive radical generating group.

In certain embodiments the film is formed by radiating ultraviolet light or heating to cause crosslinking of the polymer components.

The present invention is also directed to a marking film as defined in claim 6. The (meth)acrylic film is formed of an acidic group-containing (meth)acrylic polymer having a glass transition temperature (Tg) of 0°C or higher obtained by copolymerizing a composition containing a monoethylenically unsaturated monomer as a main component and an unsaturated monomer having an acidic group; a basic group-containing (meth)acrylic polymer having a glass transition temperature (Tg) of 0°C or lower obtained by copolymerizing a composition containing a monoethylenically unsaturated monomer as a main component and an unsaturated monomer having a basic group, and a polyisocyanate, wherein the acidic group-containing (meth)acrylic polymer, the basic group-containing (meth)acrylic polymer or both have a hydroxyl group.

The present invention is also directed to a marking film as defined in claim 7. The (meth)acrylic film is formed of an acidic group-containing (meth)acrylic polymer having a glass transition temperature (Tg) of 0°C or lower obtained by copolymerizing a composition containing a monoethylenically unsaturated monomer as a main component and an unsaturated monomer having an acidic group; a basic group-containing (meth)acrylic polymer having a glass transition temperature (Tg) of 0°C or higher obtained by copolymerizing a composition containing a monoethylenically unsaturated monomer as a main component and an unsaturated monomer having a basic group, and a polyisocyanate, wherein the acidic group-containing (meth)acrylic polymer, the basic group-containing (meth)acrylic polymer or both have a hydroxyl group

In certain embodiments the unsaturated monomer having an acidic group is an ethylenically unsaturated carboxylic acid.

In certain embodiments the the basic group is an amino group.

In certain embodiments the monoethylenically unsaturated monomer is an alkyl (meth)acrylate ester and an alkyl group has 1 to 12 carbon atoms on average.

Additionally, the invention is directed to a receptor sheet used to produce the marking film discussed herein by electrostatic toner printing, comprising the (meth)acrylic film disclosed herein, and an adhesive layer provided fixedly on the back surface of the (meth)acrylic film.

The (meth)acrylic film have both high tensile strength and elongation characteristics, which have never been achieved by a conventional acrylic film. The (meth)acrylic film exhibits excellent weatherability because it is made of a (meth)acrylic material. Furthermore, the (meth)acrylic film is useful as a substitute of a polyvinyl chloride based film that is free from halogen.

While the film is produced by mixing two or more kinds of polymers, a (meth)acrylate polymer having a high glass transition point exhibits high tensile strength of the film and a (meth)acrylate polymer having a low glass transition point improve elongation characteristics at low temperature of the film.

An acidic group and a basic group in the polymer forms a firm acid-base ionic bond and therefore improves miscibility between the polymers and exhibits toughness of the film, and also the use of a (meth)acrylic polymer exhibits excellent weatherability as compared with that of the film obtained by using a polyvinyl chloride resin.

Furthermore, the photosensitive crosslinking group enables crosslinking by irradiation with ultraviolet light, or sufficient solvent resistance can be exhibited by crosslinking with a polyisocyanate.

## Brief Description Of The Drawings

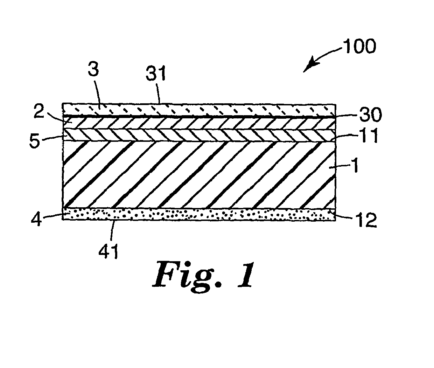

Fig. 1 is a cross-sectional view showing schematically a marking film of the present invention.

## Detailed Description

The (meth)acrylic film is formed of an acidic group-containing (meth)acrylic polymer and a basic group-containing (meth)acrylic polymer. The term "(meth)acryl" as used herein means an acryl or methacryl. The acidic group-containing (meth)acrylic polymer is obtained by copolymerizing a monoethylenically unsaturated monomer with an unsaturated monomer having an acidic group. The basic group-containing (meth)acrylic polymer is obtained by copolymerizing a monoethylenically unsaturated monomer with an unsaturated monomer having a basic group.

A first aspect of the present invention is characterized in that the acidic group-containing (meth)acrylic polymer and the basic group-containing (meth)acrylic polymer are crosslinked via a radical generating group. This radical generating group is introduced by adding the compound containing a radical generating group into the acidic group-containing (meth)acrylic polymer and/or the basic group-containing (meth)acrylic polymer to crosslink. This crosslinking is preferably carried out by radiating ultraviolet light. Alternatively, without using the compound containing a radical generating group, either or both of the acid group-containing (meth)acrylic polymer and the basic acid group-containing (meth)acrylic polymer may have a radical generating group. This radical generating group-containing polymer is obtained by copolymerizing an unsaturated monomer having a radical generating group with a monoethylenically unsaturated monomer and an unsaturated monomer having an acidic group, and/or copolymerizing with a monoethylenically unsaturated monomer and an unsaturated monomer having a basic group.

The radical generating group is a group which generates a radical under irradiation with ultraviolet light or heating. This radical induces a radical reaction and progresses a crosslinking reaction between molecules. If (meth) acrylic film is opaque, a group generating radical by heating is preferably used. Examples of compounds containing group generating radical by heating include ketone peroxide such as cyclohexanone peroxide, acetylacetone peroxide; peroxy ketal such as di-t-butylperoxy-2-methyl cyclohexane; hydroperoxide such as p-menthane hydroperoxide; dialkylperoxide such as dicumyl peroxide; diacyl peroxide such as lauroyl peroxide and benzoyl peroxide; peroxy dicarbonate such as diisopropyl peroxy dicarbonate; peroxyester such as t-buthylperoxy-2-ethylhexanoate and the like. A photosensitive radical generating group is used preferably as the radical generating group. Conventionally known compounds can be used as the compound containing a photosensitive radical generating group and examples thereof include bezoin compounds such as benzyl, benzoin and benzoin alkyl ether; ketal compounds such as benzyl alkyl ketal; acetophenone compounds such as 2,2-dialkoxyacetophenone and 2-hydroxy-2-methylpropiophenone; benzophenone compounds such as benzophenone, 4-chlorobenzophenone and diethylaminobenzophenone; thioxanthone compounds such as thioxanthone and 2-chlorothioxanthone; and anthraquinone compounds such as 2-alkylanthraquinone. Among these compounds, benzophenone is preferably used. When a (meth)acryloyl monomer having a photosensitive radical generating group is copolymerized in the polymer, the polymerization and crosslinking reaction can be carried out more efficiently, and thus it is advantageous.

A second aspect of the present invention is characterized in that either or both of the acidic group-containing (meth)acrylic polymer and the basic acid group-containing (meth)acrylic polymer have a hydroxyl group. This hydroxyl group is obtained by copolymerizing an unsaturated monomer having a hydroxyl group with a monoethylenically unsaturated monomer and an unsaturated monomer having an acidic group, and/or copolymerizing with a monoethylenically unsaturated monomer and an unsaturated monomer having a basic group.

The copolymerization is generally carried out by radical polymerization. In this case, there can be used known polymerization methods such as solution polymerization, suspension polymerization, emulsion polymerization, and bulk polymerization. As an initiator, for example, there can be used peroxides such as benzoyl peroxide, lauroyl peroxide, and bis(4-tertiary butylcyclohexyl)peroxycarbonate; and azo polymerization initiators such as 2,2'-azobisisobutyronitrile, 2,2'-azobis-2-methylbutyronitrile, 4,4'-azobis-4-cyanovalerianic acid, 2,2'-azobis-(2-methylpropionic acid)dimethyl, and azobis 2,4-dimethylvaleronitrile (AVN). The amount of the initiator is generally from 0.05 to 5 parts by weight based on 100 parts by weight of a monomer mixture.

In the (meth)acrylic film, in case Tg of the acidic group-containing (meth)acrylic polymer is controlled to a high temperature, for example 0°C or higher, Tg of the basic group-containing (meth)acrylic polymer is preferably controlled to the temperature lower than Tg of the acidic group-containing (meth)acrylic polymer (preferably 0°C or lower). In case Tg of the former is controlled to high temperature (preferably 0°C or lower), Tg of the latter is preferably controlled to low temperature (preferably 0°C or higher). Because the (meth)acrylic polymer having high Tg enables the resulting film to exhibit high tensile strength, while the (meth)acrylic polymer having low Tg improves elongation characteristics at low temperature of the film.

The weight-average molecular weight of the polymer is usually 5,000 or more, preferably 10,000 or more, and more preferably 50,000 or more. The weight-average molecular weight means a molecular weight relative to polystyrene standards using a GPC method.

The monoethylenically unsaturated monomer constituting the (meth)acrylic polymer is used as a main component of the polymer and includes, for example, those represented by the genera formula: $CH_2=CR_1COOR_2$ (wherein $R_1$ represents hydrogen or a methyl group, and $R_2$ represents a straight-chain or branched alkyl or phenyl group, an alkoxyalkyl group or a phenoxyalkyl group); aromatic vinyl monomers such as styrene, $\alpha$-methylstyrene, and vinyltoluene; and vinyl esters such as vinyl acetate. Specific examples of the monomer include phenoxyalkyl (meth)acrylates such as methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, and phenoxyethyl (meth)acrylate; and alkoxyalkyl (meth)acrylates such as methoxypropyl (meth)acrylate and 2-methoxybutyl (meth)acrylate. To obtain desired glass transition temperature, tensile strength and elongation characteristics, one or more kinds of these monomers are used according to the purposes thereof.

A (meth)acrylic polymer having Tg of 0°C or higher can be obtained easily by copolymerizing a (meth)acrylic monomer having Tg of 0°C or higher, for example, methyl methacrylate (MMA), n-butyl methacrylate (BMA) or the like as amain component.

A (meth)acrylic polymer having Tg of 0°C or lower can be obtained easily by copolymerizing a component, a homopolymer obtained there from by homopolymerization having Tg of 0°C or lower, for example, ethyl acrylate (EA), n-butyl acrylate (BA), 2-ethylhexyl acrylate (2EHA) or the like as a main component.

The glass transition temperature (Tg) of the acidic group-containing (meth)acrylic polymer and the basic group-containing (meth)acrylic polymer was determined by the FOX's equation (following equation):

$$1/Tg = X1/(Tg1 + 273.15) + X2/(Tg2 + 273.15) + \dots \dots + Xn/(Tgn + 273.15)$$

where Tg1 denotes a glass transition point of a homopolymer as a component 1,
Tg2 denotes a glass transition point of a homopolymer as a component 2,
X1 denotes a weight fraction of a monomer as a component 1 added during the polymerization,
X2 denotes a weight fraction of a monomer as a component 2 added during the polymerization, and
X1 + X2 + ... ... + Xn = 1, on the assumption that the respective polymers are copolymerized from n kinds of monomers.

Examples of the unsaturated monomer having an acidic group, which is copolymerized with the monoethylenically unsaturated monomer to form an acidic group-containing (meth)acrylic polymer, is selected from ethylenically unsaturated carboxylic acids, ethylenically unsaturated sulfonic acids, ethylenically unsaturated phosphonic acids, and mixtured thereof. Due to their availability, particularly preferred unsaturated monomer having an acidic group are the ethylenically unsaturated carboxylic acids. Examples of the ethylenically unsaturated carboxylic acids include acrylic acid, methacrylic acid, maleic acid, itaconic acid, $\omega$-carboxypolycaprolactone monoacrylate, monohydroxyethyl phthalate (meth)acrylate, $\beta$-carboxyethyl acrylate, 2-(meth)acryloyloxyethylsuccinic acid, and 2-(meth)acryloyloxyethylhexahydrophthalic acid. Examples of the ethylenically unsaturated sulfonic acids include 2-sulfoethy methacrylate, styrene sulfonic acid, 2-acrylamide-2-methylpropane sulfonic acid and the like. Examples of the ethylenically unsaturated phosphonic acids include vinyl phosphonic acid, 2-(meth)acryloyloxyethyacid phosphonic acid and the like.

The acidic group-containing (meth)acrylic polymer is preferably obtained by copolymerizing 80 to 95.5 parts by weight of the monoethylenically unsaturated monomer as a main component with 0.5 to 20 parts by weight of the unsaturated monomer having an acidic group.

Examples of the unsaturated monomer having a basic group, which is copolymerized with the monoethylenically unsaturated monomer to form a basic group-containing (meth)acrylic polymer, include an unsaturated monomer having an amino group, for example dialkylaminoalkyl (meth)acrylates such as N,N-dimethylaminoethyl acrylate (DMAEA) and N,N-dimethylaminoethyl methacrylate (DMAEMA); dialkylaminoalkyl (meth)acrylamides such as N,N-dimethylaminopropylacrylamide (DMAPAA) and N,N-dimethylaminopropylmethacrylamide; dialkylaminoalkyl vinylether such as N,N-dimethylaminoethyl vinylether, and N,N-diethylaminoethyl vinylether; and mixtures thereof. Other examples of a monomer having an amino group include monomers having a tertiary amino group represented by vinyl monomer having a nitrogen-containing heterocycle such as vinylimidazole; styrene having a tertiary amino group such as 4-(N,N-dimethylamino) styrene and 4-(N,N-diethylamino)styrene; and mixtures thereof.

Examples of the benzophenone photosensitive crosslinking group-containing monomer include 4-acryloyloxybenzophenone and acrylated benzophenone (manufactured by Dicel-UCB Company LTD, for example, under the trade name of Ebecryl™ P35).

Examples of the hydroxy group-containing monomer include hydroxyalkyl (meth)acrylates such as 2-hydroxyethyl (meth)acrylate, 3-hydroxypropyl (meth)acrylate, 2-hydroxypropyl (meth)acrylate and 4-hydroxybutyl (meth)acrylate; glycerin mono(meth)acrylate, 2-hydroxy-3-phenoxypropyl (meth)acrylate, and "Placcel F series (manufactured by Dicel Chemical Industries, Ltd.) as polycaprolactone-modified products of 2-hydroxyethyl (meth)acrylate. One or more kinds of these monomers can be used.

The basic group-containing (meth)acrylic polymer is preferably obtained by copolymerizing 80 to 95.5 parts by weight of the monoethylenically unsaturated monomer as a main component with 0.5 to 20 parts by weight of the unsaturated monomer having a basic group.

The content of a compound having a radical generating group or a monomer having a hydroxyl group is preferably from 0.1 to 20 parts by weight based on 0.5 to 20 parts by weight of a monomer having an acidic group and/or a basic group. In case the compound having a radical generating group or a monomer having a hydroxyl group is copolymerized in the polymer, 80 to 95.5 parts by weight of the monoethylenically unsaturated monomer, 0.5 to 20 parts by weight of the monomer having an acidic group and/or a basic group and 0.1 to 20 parts by weight of the compound having a radical generating group or a monomer having a hydroxyl group are preferably copolymerized.

After the acidic group-containing (meth)acrylic polymer and the basic group-containing (meth)acrylic polymer were separately polymerized as described above, a (meth)acrylic film of the present invention can be formed by a conventional film forming method. Specifically, the film can be formed by mixing solutions of these polymers, applying the mixed solution on the release surface of a liner, and solidifying the solution with drying. As a coating device, there can be used conventional coaters such as bar coater, knife coater, roll coater, and die coater. The solidifying operation is the same as the operation of cooling the molten resin component. Also this film can be formed by a melt extrusion molding method.

A film having desired tensile strength and elongation characteristics can be obtained by changing a mixing ratio of the acidic group-containing (meth)acrylic polymer to the basic group-containing (meth)acrylic polymer in the formation of the film. Specifically, a mixing ratio of a polymer having high Tg to a polymer having low Tg among the carboxyl group-containing (meth)acrylic polymer and the amino group-containing (meth)acrylic polymer is preferably within a range from 10:90 to 90:10, more preferably from 20:80 to 90:10, and most preferably from 30:70 to 90:10. It is preferable to increase the amount of the polymer having high Tg.

Furthermore, tensile strength and elongation characteristics can be freely adjusted by adding a polyfunctional (meth)acrylate monomer or oligomer. This polyfunctional (meth)acrylate monomer or oligomer can be incorporated into the polymer by irradiation with ultraviolet light. Examples of the polyfunctional (meth)acrylate monomer or oligomer include alkyl di(meth)acrylates such as hexanediol di(meth)acrylate; polyalkylene glycol di(meth)acrylates such as polyethylene glycol di(meth)acrylate; polyfunctional (meth)acrylates such as di(meth)acrylate-modified bisphenol A, hydroxypivalic acid neopentyl glycol di(meth)acrylate, trimethylolpropane tri(meth)acrylate, pentaerythritol poly(meth)acrylate and dipentaerythritol poly(meth)acrylate; and epoxy (meth)acrylates and urethane (meth)acrylates, such as (meth) acrylic acid adduct of ethylene glycol diglycidyl ether and (meth)acrylic acid adduct of glycerin diglycidyl ether.

In the formation of the film, the acidic group-containing (meth)acrylic polymer and the basic group-containing (meth)acrylic polymer are crosslinked via a radical generating group in the first aspect, or they are crosslinked by the reaction of a hydroxyl group with a polyisocyanate in the second aspect. By crosslinking them, networks are formed, and thus it contributes to improve elongation characteristics at low temperature.

Examples of the polyisocyanate reacted with a hydroxyl group in the second aspect include isophorone diisocyanate; aromatic isocyanates such as tolylene diisocyanate, diphenylmethane diisocyanate and xylylene diisocyanate; aliphatic isocyanates such as hydrogenated tolylene diisocyanate, hydrogenated diphenylmethane diisocyanate, hydrogenated xylylene diisocyanate and hexamethylene diisocyanate; and polyisocyanates such as multimer of tolylene diisocyanate, Coronate L and polymethylene polyisocyanate. The amount of the polyisocyanate is preferably adjusted so that a ratio of the polyisocyanate to the hydroxyl group, (NCO/OH), is from 0.3 to 1.0, It contributes to exhibit sufficient solvent resistance.

In the (meth)acrylic film, the tensile break strength is preferably 3 MPa or more, more preferably 10 MPa or more, and most preferably 20 MPa or more. When the tensile break strength is less than 3 MPa, there arises a problem that the resulting film is likely to be broken when applied on the adherend. In the (meth)acrylic film of the present invention, the elongation is preferably 20% or more, more preferably 50% or more, and most preferably 75% or more. When the elongation is less than 20%, there arises a problem that the resulting film is likely to be broken when applied on the adherend.

The tensile strength and elongation are measured under the following conditions in accordance with the method defined in JIS K6251.
Shape of sample to be measured: "dumbbell shaped No. 3 test piece" defined in JIS K6251
Testing speed: 300 mm/min
Measuring temperature: 5°C and 25°C

The thickness of the (meth)acrylic film is not specifically limited and can be controlled to the same thickness as that of a conventional decorative sheet. Specifically, the thickness is generally within a range from 1 to 1000 μm, preferably from 5 to 500 μm, and more preferably from 20 to 150 μm, although it varies depending on the purposes. When the thickness is too large, the mechanical strength decreases and the resulting film is likely to be broken when the film is peeled after bonding to the adherend. On the other hand, when the thickness is too large, the flexibility of the film is likely to be deteriorated.

To the (meth)acrylic film, hiding pigments can be added when hiding properties are required. If necessary, one or more conventionally known additives such as antioxidants, ultraviolet absorbers, photostabilizers, plasticizers, lubricants, antistatic agents, flame retardants, and fillers may be added according to the purposes of the film. Tensile strength and elongation characteristics can be freely adjusted by adding plasticizers such as polyetherpolyol, polyesterpolyol or polycarbonate. Since these plasticizers react with the polyisocyanate and incorporated into the polymer, problems such as exudation do not arise.

(Marking film)

Preferred example of the marking film of the present invention will be described with reference to Fig. 1. Fig. 1 is a cross-sectional view showing schematically the marking film of the present invention. A (meth)acrylic film (1) in a marking film (100) has a surface (11) and a back surface (12) and receives a colorant received on the surface (11), namely, a toner (2). In order to prevent the toner from falling off, a protective film (3) can be provided on the surface of the film. In this case, the toner (2) forms a visible image from the outermost surface (31) of the protective film (3) through the protective film (3). Also adhesion between the toner (2) and the (meth)acrylic film (1) can be enhanced by providing a receptor layer (5) on the surface (11) of the (meth)acrylic film (1).

On the back surface (12) of the (meth)acrylic film (1), an adhesive layer (4) is fixedly provided. The adhesive layer usually forms a flat adhesive surface, but it may have an uneven adhesive surface. On the uneven adhesive surface (41) of the adhesive layer (4), a protruding portion and a recessed portion surrounding the protruding portion are formed and a communicating passage in communication with the outside is defined by the space between the recessed portion of the adhesive surface (41) and the surface of the adherend in the state of being bonded to the adherend.

As the (meth)acrylic film (1), the above-mentioned the (meth)acrylic film is used. The colorant is usually a toner or ink. The toner comprises a binder resin and a pigment dispersed in the binder resin. The binder resin is composed of a mixture of one or more kinds selected from the group consisting of vinyl chloride-vinyl acetate copolymer, an acrylic resin and polyester resin.

The entire protective film (3) has light transmission properties. A light transmission is usually 60% or more, preferably 70% or more, and particularly preferably 80% or more. The term "light transmission" as used herein means an entire light transmission as measured by a spectrophotometer or, a color meter which also serves as a photometer, using light having a wavelength of 550 nm.

The protective film (3) is preferably made of a resin film containing high transparency. The resin of the resin film includes, for example, fluororesin, phthalate polyester (e.g. PET and PEN), acrylic resin, and petroleum-resistant resin. The fluororesin is a polymer obtained by polymerizing the fluorine monomer. The fluorine monomer includes, for example, fluorine ethylene monomers such as vinylidene fluoride, propylene hexafluorine, ethylene tetrafluoride, and ethylene chloride trifluoride. It is possible to mix one or more kinds of copolymerizable monomers selected from methacrylates such as methyl methacrylate, ethyl methacrylate, propyl methacrylate, and butyl methacrylate; and acrylates such as methyl acrylate, ethyl acrylate, propyl acrylate, and butyl acrylate, in addition to the fluorine monomer. Also a protective film may be made of a resin composition obtained by blending the fluorine resin with the acrylic resin. The thickness of the protective film is usually within a range from 5 to 120 μm, and preferably from 10 to 100 μm.

An adhesive layer for protective film (30) is usually used to bond the protective film (3) to the (meth)acrylic film (1). The adhesive of the adhesive layer for protective film (30) is not specifically limited, but is usually a pressure-sensitive adhesive containing an adhesive polymer by the following reason. That is, the pressure-sensitive adhesive satisfactorily conforms to the unevenness formed by the toner (2) in the surface (11) of the (meth)acrylic film, thereby making it possible to make the protective film (3) and the (meth)acrylic film (1) come closely into contact with each other without leaving bubbles therebetween. It is preferable so as not to leave bubbles because bubbles impair the visibility. The thickness of the adhesive layer for protective film (30) is usually within a range from 20 to 100 μm, and preferably from 25 to 80 μm.

The resin constituting the receptor layer (5) is not specifically limited and there can be used acrylic polymer, polyolefin, polyvinyl acetal and phenoxy resin. The glass transition temperature of the resin constituting the receptor layer is usually within a range from 0 to 100°C. When the glass transition temperature of the receptor layer is too high, the toner transferrability is lowered and a clear image may not be obtained. Furthermore, when the glass transition temperature of the receptor layer is too high, the flexibility of the entire marking film may be lowered. The glass transition temperature of the receptor layer is preferably adjusted to 0°C or higher in order to effectively lower tack at normal temperature of the surface of receiving the colorant. Consequently, it is made possible to effectively prevent sticking of marking film precursors and receptor sheets before coating with the protective film. Therefore, after stored in the form of a roll, the roll can be used easily while unwinding. The thickness of the receptor layer is usually within a range from 2 to 50 μm, and preferably from 5 to 40 μm.

The adhesive of the adhesive layer (4) is not specifically limited and is usually a pressure-sensitive adhesive containing an adhesive polymer. As the pressure-sensitive adhesive layer, for example, a single-layered pressure-sensitive adhesive film containing an adhesive polymer and a double-coated adhesive sheet comprising two pressure-sensitive layers are preferably used.

The adhesive layer (4) can be made of a coating film of an adhesive containing an adhesive polymer. Preferable adhesive comprises an adhesive polymer and a crosslinking agent containing the adhesive polymer. The term "adhesive polymer" used herein refers to a polymer which exhibits adhesion at normal temperature (about 25°C). As the adhesive polymer, for example, acrylic polymer, polyurethane, polyolefin and polyester can be used.

An example of the synthesis of the adhesive polymer will be explained by way of an acrylic polymer. First, a polar (meth)acrylic monomer such as acrylic unsaturated acid (for example, acrylic acid, methacrylic acid, itaconic acid, or maleic acid) or acrylonitrile is prepared as a first monomer. The first monomer is mixed with an acrylic monomer as a second monomer to prepare a monomer mixture. As the second monomer, there can be used alkyl acrylates, for example, isooctyl acrylate, butyl acrylate, 2-methylbutyl acrylate, 2-ethylhexyl acrylate, and isononyl acrylate. Using a solution polymerization, emulsion polymerization or bulk polymerization method, an adhesive polymer having a predetermined molecular weight is synthesized from the mixture thus prepared.

When using a crosslinking agent in case of crosslinking the adhesive polymer, the amount of the crosslinking agent varies depending on the kind of the crosslinking agent, but is usually within a range from 0.02 to 2 parts by weight, and preferably from 0.03 to 1 parts by weight, based on 100 parts by weight of the adhesive polymer. As the crosslinking agent, for example, there can be used isocyanate compound, melamine compound, poly(meth)acrylate compound, epoxy compound, and amide compound, bisamide compound [bisaziridine derivative of dibasic acid such as isophthaloylbis(2-methylaziridine)].

The glass transition temperature (Tg) of the adhesive layer is preferably within a range from -50 to 0°C, and more preferably from -45 to -5°C. When Tg of the adhesive layer is too high, adhesion between the adherend and the marking film is likely to be lowered. On the other hand, when Tg of the adhesive layer is too low, when the marking film is stored in the form of a roll, the adhesive oozes from the side portion of the roll and sticking of mutually contacted marking films may not be prevented. Tg is a value determined from Tan δ measured by using a dynamic viscoelasticity measuring device (Rheometrics Scientific Inc. RDA-II). The measurement was carried out under the conditions of a shear rate of 1 radian/see (torsion mode), a heating range from -60 to 100°C and a heating rate of 5°C/sec. The thickness of the specimen is usually from 1 to 2 mm.

The thickness of the adhesive film is usually within a range from 5 to 200 μm, preferably from 20 to 100 μm, and more preferably from 25 to 80 μm. As far as the effect of the present invention is not impaired, there can be added additives such as tackifiers, elastic microspheres, adhesive polymer microspheres, crystalline polymers, inorganic powders, and ultraviolet absorbers.

The adhesive layer (4) usually has a flat adhesive surface, but may have an uneven adhesive surface as described above. An example of a method of forming the uneven adhesive surface will be described.

First, a liner having a release surface of a predetermined uneven structure is prepared. A coating composition containing an adhesive polymer (adhesive coating composition for forming an adhesive layer of an adhesive sheet) is applied on the release surface of the liner, and then dried to form an adhesive layer. Consequently, a negative structure of the uneven structure of the liner is imparted to the surface of the adhesive layer in contact with the liner, this adhesive surface subsequently serving as the adhesive surface of the adhesive sheet to form an uneven adhesive surface having a predetermined structure (positive structure) on the adhesive surface. The unevenness of the adhesive surface is designed so as to include a groove capable of forming a communicating passage to the edge of the adhesive sheet when the adhesive sheet is bonded to an adherend, as described above.

As far as it is possible to prevent bubbles from being trapped during application of the marking film, grooves in the surface of the adhesive layer having a predetermined shape may be disposed on the adhesive layer in a regular pattern to provide grooves having a regular pattern, or a grooves having an irregular shape may be disposed to provide grooves having an irregular pattern. When a plurality of grooves is formed where the grooves are generally parallel with each other, the distance between the grooves is preferably from 10 to 2,000 μm. The depth of the grooves (the distance between the adhesive surface and the bottom of the groove measured in the direction of the thickness of the receptor film) is usually from 10 to 100 μm. Also the shape of the groove is not specifically limited so long as the effect of the present invention is not impaired. For example, the groove may have a generally rectangular, trapezoidal, semicircular or semielliptical cross section in a direction perpendicular to the adhesive surface.

A marking film (100) can be produced in the following manner. First, the above-mentioned (meth)acrylic film (1) is prepared. In case the marking film (100) includes a receptor layer (5), the receptor layer is formed on the liner and the (meth)acrylic film is then formed on the receptor layer with the liner. In this case, as far as the effect of the present invention is not impaired, the other layer, for example, a primer layer or an adhesive layer may be provided between the (meth)acrylic film (1) and the receptor layer (5).

Then, an adhesive layer (4) is made to come closely into contact with the back surface of the (meth)acrylic film (1). A coating solution containing an adhesive is applied on the release surface of the liner and dried to form an adhesive layer with the liner, and then the adhesive layer with the liner is laminated on the back surface of the (meth)acrylic film (1), thereby making the adhesive layer cone closely into contact with the back surface of the (meth)acrylic film.

Then, an image is formed on the surface of the (meth)acrylic film (1) by the toner (2) and a protective film (3) is optionally provided thereon, thereby making it possible to complete the marking film (100) of the present invention. In case an image is formed by transferring the toner (2) onto the surface of the (meth)acrylic film (1), the image is formed by transferring the toner using a conventional printing method. In case of using an electrostatic printing method, an image is temporarily formed on a temporary carrier referred to as a transfer media and the image is then transferred onto the surface of the (meth)acrylic film (1) by heating under pressure.

The thickness of the marking film is usually within a range from 30 to 1500 μm, preferably from 50 to 950 μm. When the thickness is too small, the mechanical strength decreases and the marking film is likely to be broken when peeled again after bonding to the adherend. On the other hand, when the thickness is too large, the flexibility of the marking film is likely to be lowered.

(Receptor sheet)

The receptor sheet of the present invention is a film with an adhesive layer, which comprises the (meth)acrylic film to which colorants such as toner are applied, and an adhesive layer which bonds the (meth)acrylic film to an adherend. That is, the receptor sheet does not include the toner (2) and the protective film (3) and is composed of the (meth)acrylic film (1) and the adhesive layer (4). Therefore, the (meth)acrylic film and the adhesive layer can have the same constitution as that of the marking film, and also the same formation methods can be used.

The total thickness of the receptor sheet is usually within a range from 5 to 1200 μm, and preferably from 25 to 700 μm. When the thickness is too small, the mechanical strength decreases and the receptor sheet is likely to be broken when the marking film is peeled again after bonding to the adherend. On the other hand, when the thickness is too large, the flexibility of the marking film including the receptor sheet is likely to be deteriorated.

Examples

<u>Production of acrylic polymer having Tg of 0°C or higher</u>

79 Parts by weight of methyl methacrylate (MMA), 15 parts by weight of butyl acrylate (BA) and 6 parts by weight of dimethylaminoethyl methacrylate (DMM) were dissolved in 150 parts by weight of ethyl acetate and, after adding 0.6 parts by weight of dimethyl-2,2'-azobis(2-methylpropionate) (V-601, manufactured by Wako Pure Chemical Industries, Ltd.) as a polymerization initiator, the mixture was reacted in a nitrogen atmosphere at 65°C for 24 hours to obtain an ethyl acetate solution of an acrylic polymer having Tg of 0°C or higher (hereinafter referred to as H-1).

Separately, 79 parts by weight of MMA, 15 parts by weight of BA, 6 parts by weight of DMM and 2 parts by weight of 4-acryloyloxybenzophenone (ABP) were dissolved in 150 parts by weight of ethyl acetate and, after adding 0.6 parts by weight of V-601 as a polymerization initiator, the mixture was reacted in a nitrogen atmosphere at 65°C for 24 hours to obtain an ethyl acetate solution of a benzophenone group-containing acrylic polymer having Tg of 0°C or higher (hereinafter referred to as H-2).

In the same manner as described above, ethyl acetate solutions of acrylic polymers (H-3) to (H-6) were prepared according to the composition shown in Table 1 described hereinafter.

Separately, 69 parts by weight of MMA, 15 parts by weight of BA, 6 parts by weight of DMM and 10 parts by weight of 2-hydroxyethyl methacrylate (HEMA) were dissolved in 150 parts by weight of ethyl acetate and, after adding 0.6 parts by weight of V-601 as a polymerization initiator, the mixture was reacted in a nitrogen atmosphere at 65°C for 24 hours to obtain an ethyl acetate solution of a hydroxyl group-containing acrylic polymer having Tg of 0°C or higher (hereinafter referred to as H-7).

In the same manner as described above, ethyl acetate solutions of acrylic polymers (H-8) to (H-10) were prepared according to the composition shown in Table 1 described hereinafter.

Production of acrylic polymer having Tg of 0°C or lower

94 Parts by weight of BA and 6 parts by weight of acrylic acid (AA) were dissolved in 100 parts by weight of methyl ethyl ketone (MEK) and, after adding 0.2 parts by weight of azobis(2,4-dimethylvaleronitrile) (V-65, manufactured by Wako Pure Chemical Industries, Ltd.) as a polymerization initiator, the mixture was reacted in a nitrogen atmosphere at 50°C for 24 hours to obtain a MEK solution of an acrylic polymer having Tg of 0°C or lower (hereinafter referred to as S-1).

Separately, 94 parts by weight of BA, 6 parts by weigh of AA and 2 parts by weight of ABP were dissolved in 100 parts by weight of methyl ethyl ketone (MEK) and, after adding 0.2 parts by weight of V-65 as a polymerization initiator, the mixture was reacted in a nitrogen atmosphere at 50°C for 24 hours to obtain a MEK solution of a benzophenone group-containing acrylic polymer having Tg of 0°C or lower (hereinafter referred to as S-2).

In the same manner as described above, MEK solutions of acrylic polymers (S-3) to (S-4) were prepared according to the composition shown in Table 2 described hereinafter.

Separately, 94 parts by weight of BA, 6 parts by weight of AA and 10 parts by weight of 2-hydroxyethyl acrylate (HEA) were dissolved in 100 parts by weight MEK and, after adding 0.2 parts by weight of V-65 as a polymerization initiator, the mixture was reacted in a nitrogen atmosphere at 50°C for 24 hours to obtain an ethyl acetate solution of a hydroxyl group-containing acrylic polymer having Tg of 0°C or lower (hereinafter referred to as S-5).

In the same manner as described above, MEK solutions of acrylic polymers (S-6) to (S-9) were prepared according to the composition shown in Table 2 described hereinafter.

Table 1

| Production Example of acrylic polymer having Tg of 0°C or higher | | | | | |
|---|---|---|---|---|---|
| Polymer | Composition | Acrylated benzophenone | | Functional group | Tg |
| H-1 | MMA/BA/DMM (79:15:6 wt%) | none | - | Tertiary amino group | 62°C |
| H-2 | MMA/BA/DMM (79:15:6 wt%) | APB | 2.0 phr | Tertiary amino group | 62°C |
| H-3 | MMA/BMA/MAA (34:60:6 wt%) | ABP | 2.0 phr | Carboxyl group | 53°C |
| H-4 | MMA/BA/DMM (79:15:6 wt%) | EB-P36 | 0.5 phr | Tertiary amino group | 62°C |
| H-5 | MMA/BA/DMM (79:15:6 wt%) | EB-P36 | 2.0 phr | Tertiary amino group | 62°C |
| H-6 | MMA/BA/DMM (64:30:6 wt%) | EB-P36 | 0.5 phr | Tertiary amino group | 32°C |
| H-7 | MMA/BA/DMM/HEMA (69:15:6:10 wt%) | none | - | Tertiary amino group | 57°C |
| H-8 | MMA/BA/DMM/HEMA (73:15:6:6 wt%) | none | - | Tertiary amino group | 59°C |
| H-9 | MMA/BA/DMM/HEMA (76:15:6:3 wt%) | none | - | Tertiary amino group | 60°C |
| H-10 | MMA/BMA/MAA/HEMA (30:58:6:6 wt%) | none | - | Carboxyl group | 52°C |

Table 2

| Production Example of acrylic polymer having Tg of 0°C or lower | | | | | |
|---|---|---|---|---|---|
| Polymer | Composition | Acrylated | benzophenone | Functional group | Tg |
| S-1 | BA/AA (94:6 wt%) | none | - | Carboxyl group | -49°C |
| S-2 | BA/AA (94:6 wt%) | APB | 2.0 phr | Carboxyl group | -49°C |
| S-3 | BA/DMA (90:10 wt%) | ABP | 2.0 phr | Tertiary amino group | -50°C |
| S-4 | BA/AA (94:6 wt%) | EB-P36 | 0.5 phr | Carboxyl group | -49°C |
| S-5 | BA/AA/HEA (84:6:10 wt%) | none | - | Carboxyl goup | -46°C |

(continued)

| Production Example of acrylic polymer having Tg of 0°C or lower | | | | | |
|---|---|---|---|---|---|
| Polymer | Composition | Acrylated | benzophenone | Functional group | Tg |
| S-6 | BA/AA/HEA (88:6:6 wt%) | none | - | Carboxyl group | -47°C |
| S-7 | BA/AA/HEA (91:6:3 wt%) | none | - | Carboxyl group | -48°C |
| S-8 | BA/AA/4-HBA (88:6:6 wt%) | none | - | Carboxyl group | -48°C |
| S-9 | BA/DMA/HEA (84:10:6 wt%) | none | - | Tertiary amino group | -45°C |

Reference Example 1

After mixing with stirring so as to adjust the solid content ratio of the photosensitive radical generating group-free acrylic polymer solution H-1 to the photosensitive crosslinking group-free acrylic polymer solution S-1 to 50:50, the resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain a (meth)acrylic film.

Using an ultraviolet irradiation equipment UVC-183 manufactured by USHIO INC. and a high-pressure mercury lamp (160 W/cm) having a peak wavelength at about 350 nm, this film was irradiated with ultraviolet light (1000 mj/cm$^2$). The resulting film was subjected to various tests by the following evaluation procedures. The results are shown in Table 3. The film showed high tensile strength and elongation characteristics, but was not crosslinked because it has no photosensitive radical generating group, and was inferior in solvent resistance.

Tensile test

The tensile strength and elongation were measured under the following conditions in accordance with the method defined in JIS K6251.

Shape of sample to be measured: "dumbbell shaped No. 3 test piece" defined in JIS K6251

Testing speed: 300 mm/min

Measuring temperature: 5°C and 25°C

The measured results were summarized as follows.

Tensile strength T (at break) (MPa)

After measuring a maximum tensile force F (unit: N) up to breakage of a test piece and a cross section A (unit: mm$^2$) of the test piece, the tensile strength was determined by the following equation.

$$T = F/A$$

Tensile strength T (at yield) (MPa)

After measuring a maximum tensile force F' (unit: N) up to yield of a test piece and a cross section A (unit: mm$^2$) of the test piece, the tensile strength was determined by the following equation.

$$T = F'/A$$

Elongation E (unit: %)

After measuring a distance between marked lines L1 (unit: mm) upon breakage and a distance between marked lines LO of a test piece, the elongation was determined by the following equation.

$$E = (L1 - L0)/L0 \times 100$$

Solvent resistance test

After immersing a sample under the following conditions, a change in appearance was visually evaluated by the five-rank rating.
Solvent to be used: isopropyl alcohol (IPA), mixed solution (Fuel C) of toluene and 2,2,4-trimethylpenatane in a mixing ratio of 1: 1
Immersion at 25°C for 24 hours

Five-rank rating

1: drastically deteriorated
2: deteriorated
3: changed, swelling occurred
4: slightly changed
5: not changed

Reference Example 2

After mixing with stirring so as to adjust the solid content ratio of the benzophenone group-containing acrylic polymer solution H-2 to the benzophenone group-containing acrylic polymer solution S-2 to 50:50, the resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain a (meth)acrylic film. The resulting film was subjected to various tests. The results are shown in Table 3. The film showed high tensile strength and elongation characteristics, but was not crosslinked because it was not irradiated with ultraviolet light, and was inferior in solvent resistance.

Example 1

Using an ultraviolet irradiation equipment UVC-183 manufactured by USHIO INC. and a high-pressure mercury lamp (160 W/cm) having a peak wavelength at about 350 nm, the film obtained in Reference Example 2 was irradiated with ultraviolet light (1000 mj/cm$^2$). The resulting film was subjected to various tests. The results are shown in Table 3. The film showed high tensile strength and elongation characteristics and also exhibited sufficient solvent resistance.

Examples 2 to 4

In the same manner as in Example 1, the acrylic films produced according to the formulation shown in Table 3 were irradiated with ultraviolet light and the resulting films were subjected to various tests. The results are shown in Table 3. These films showed high tensile strength and elongation characteristics and also exhibited sufficient solvent resistance.

Comparative Example 1

A copolymer was produced according to the same monomer composition as in Example 1. Namely, 39.5 parts by weight of MMA, 54.5 parts by weight of BA, 3.0 parts by weight of DMM, 3.0 parts by weight of AA and 2.0 parts by weight of ABP were dissolved in 185 parts by weight of ethyl acetate and, after adding 0.6 parts by weight of V-601 as a polymerization initiator, the mixture was reacted in a nitrogen atmosphere at 65°C for 24 hours to obtain an ethyl acetate solution of an acrylic polymer. The resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain an acrylic film. In the same manner as in Example 1, the resulting film was irradiated with ultraviolet light and then subjected to various tests. The results are shown in Table 3. The film was excellent in solvent resistance, but was particularly inferior in elongation characteristics at low temperature.

Reference Example 3

After mixing with stirring so as to adjust the solid content ratio of the acrylic polymer solution H-4 to the acrylic polymer solution S-4 to 50:50, and mixing with KAYARAD™ UX-6101 (polyether urethane elastomer manufactured by Nippon Kayaku Co., Ltd., molecular weight: 10,000) in an amount of 25 parts by weight based on 100 parts by weight of the total solid content, the resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain an acrylic film. The resulting film was subjected to various tests. The results are shown in Table 4. The film showed high tensile strength and elongation characteristics, but was not crosslinked because it was not irradiated with ultraviolet light, and was inferior in solvent resistance.

Example 5

In the same manner as in Example 1, the film produced in Reference Example 3 was irradiated with ultraviolet light. The resulting film was subjected to various tests. The results are shown in Table 4. The film showed high tensile strength and elongation characteristics and also exhibited sufficient solvent resistance.

Examples 6 to 9

Using various urethane acrylate oligomers, acrylic films were produced according to the formulation shown in Table 4. In the same manner as in Example 5, these films were irradiated with ultraviolet light. The resulting films were subjected to various tests. The results are shown in Table 4. These films showed high tensile strength and elongation characteristics and also exhibited sufficient solvent resistance.

Examples 10 to 12

Using various functional acrylate monomers, acrylic films were produced according to the formulation shown in Table 4. In the same manner as in Example 5, these films were irradiated with ultraviolet light. The resulting films were subjected to various tests. The results are shown in Table 4. These films showed high tensile strength and elongation characteristics and also exhibited sufficient solvent resistance.

As is apparent from the above results, the tensile strength and elongation characteristics can be freely adjusted by adding an oligomer such as polyfunctional acrylic monomer or urethane acrylate while maintaining sufficient solvent resistance.

Table 3

| Test results | | | | | | | | | | | | |
|---|---|---|---|---|---|---|---|---|---|---|---|---|
| Examples | Hard | Soft | Ratio | UV mj/cm$^2$ | 25°C | | | 5°C | | | Solvent resistance | |
| | | | | | Tensile stress (MPa) | | Elongation at break (%) | Tensile stress (MPa) | | Elongation at break (%) | IPA | Fuel C |
| | | | | | Yield | Break | | Yield | Break | | | |
| Reference Example 1 | H-1 | S-1 | 50:50 | 1,000 | 11 | 22 | 380 | 27 | 31 | 250 | 1 | 1 |
| Reference Example 2 | H-2 | S-2 | 50:50 | 0 | 11 | 23 | 470 | 30 | 28 | 190 | 1 | 1 |
| Example 1 | H-2 | S-2 | 50:50 | 1,000 | 14 | 22 | 220 | 35 | 32 | 130 | 5 | 5 |
| Example 2 | H-1 | S-2 | 50:50 | 1,000 | 14 | 26 | 230 | 40 | 35 | 190 | 5 | 5 |
| Example 3 | H-2 | S-1 | 50:50 | 1,000 | 16 | 27 | 250 | 31 | 40 | 75 | 3 | 2 |
| Example 4 | H-3 | S-3 | 50:50 | 1,000 | 8 | 16 | 210 | 23 | 29 | 210 | 5 | 5 |
| Comparative Example 1 | Copolymer | | | 1,000 | 7 | 18 | 270 | 36 | 36 | 17 | 5 | 5 |

Table 4

| Addition of poly functional monomer and oligomer | | | | | | | | | | | | | |
|---|---|---|---|---|---|---|---|---|---|---|---|---|---|
| Examples | Hard | Soft | Ratio | Oligomer phr | UV mj/cm$^2$ | 25°C | | | 5°C | | | Solvent resistance | |
| | | | | | | Tensile stress (MPa) | | Elongation at break (%) | Tensile stress (MPa) | | Elongation at break (%) | IPA | Fuel C |
| | | | | | | Yield | Break | | Yield | Break | | | |
| Reference Example 3 | H-4 | S-4 | 50:50 | UX-6101 25 | 0 | 10 | 10 | 340 | 22 | 17 | 160 | 1 | 1 |
| Example 5 | H-4 | S-4 | 50:50 | UX-6101 25 | 1,000 | 12 | 23 | 300 | 24 | 33 | 230 | 4 | 4 |
| Example 6 | H-4 | S-4 | 50:50 | UX-8101 25 | 1,000 | 16 | 24 | 280 | 33 | 31 | 160 | 4 | 4 |
| Example 7 | H-2 | S-2 | 50:50 | U-200AX 25 | 1,000 | 12 | 17 | 180 | 27 | 27 | 100 | 4 | 4 |
| Example 8 | H-2 | S-2 | 50:50 | EB8402 25 | 1,000 | 16 | 24 | 190 | 39 | 31 | 80 | 5 | 5 |
| Example 9 | H-2 | S-2 | 50:50 | UA-512T 25 | 1,000 | 13 | 23 | 170 | 32 | 34 | 110 | 4 | 3 |
| Example 10 | H-5 | S-4 | 50:50 | R-551 25 | 1,000 | 12 | 22 | 310 | 29 | 30 | 160 | 4 | 4 |
| Example 11 | H-6 | S-4 | 50:50 | TMPTA 25 | 1,000 | 9 | 21 | 260 | 30 | 29 | 120 | 5 | 5 |
| Example 12 | H-6 | S-4 | 50:50 | DPHA 25 | 1,000 | 14 | 23 | 130 | 34 | 33 | 90 | 5 | 5 |

Reference Examples 4 to 5

After mixing an acrylic polymer solution with stirring according to the formulation shown in Table 5, the resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain an acrylic film. The resulting film was subjected to various tests. The results are shown in Table 5. The film showed high tensile strength and elongation characteristics, but was not crosslinked because a polyisocyanate was not added, and was inferior in solvent resistance.

Examples 13 to 23

After adding isophorone diisocyanate (IPDI) as the polyisocyanate, acrylic films were produced according to the formulation shown in Table 5 in the same manner as in Reference Example 4. The resulting films were subjected to various tests. The results are shown in Table 5. The solvent resistance was remarkably improved while reconciling high tensile strength and high elongation characteristics. It has been found that sufficient solvent resistance can be exhibited when the amount of isophorone diisocyanate is adjusted so that a ratio of NCO to OH is 0.3 or more.

Examples 24 to 28

Using various plasticizers, acrylic films were produced according to the formulation shown in Table 5. The resulting films were subjected to various tests. The results are shown in Table 5. It has been found that the tensile strength and elongation characteristics at low temperature can be improved while maintaining sufficient solvent resistance, and the tensile strength and elongation characteristics can be freely adjusted.

Comparative Example 2

A copolymer was produced according to the same monomer composition as in Example 13. Namely, 34.5 parts by weight ofMMA, 49.5 parts by weight ofBA, 3.0 parts by weight of DMM, 3.0 parts by weight of AA, 5.0 parts by weight of HEMA and 5.0 parts by weight of HEA were dissolved in 185 parts by weight of ethyl acetate and, after adding 0.6 parts by weight of V-601 as a polymerization initiator, the mixture was reacted in a nitrogen atmosphere at 65°C for 24 hours to obtain an ethyl acetate solution of an acrylic polymer. After adding isophorone diisocyanate according to the formulation shown in Table 5, the resulting solution was applied on a 38 μm released polyester carrier film (manufactured by TEIJIN LIMITED under the trade name of Purex™ A-71) by using knife coater so that the resulting film has a thickness of 50 μm after drying, and dried at 100°C for 20 minutes, followed by removal of the carrier film to obtain an acrylic film. In the same manner as in Example 13, the resulting film was subjected to various tests. The results are shown in Table 5. The film was excellent in solvent resistance, but was particularly inferior in elongation characteristics at low temperature.

Comparative Example 3

After adding a plasticizer to the copolymer produced in Comparative Example 2, a film was produced. In the same manner as described above, the resulting film was subjected to various tests. The results are shown in Table 5. The film was excellent in solvent resistance and showed improved elongation characteristics at low temperature, but was insufficient in tensile strength at 25°C.

Table 5

| Test results | | | | | | | | | | | | | | |
|---|---|---|---|---|---|---|---|---|---|---|---|---|---|---|
| Examples | Hard | Soft | Ratio | Plasticizer (phr) | IPDI (phr) | NCO/OH | 25°C | | | 5°C | | | Solvent resistance | |
| | | | | | | | Tensile stress (MPa) | | Elongation at break (%) | Tensile stress (MPa) | | Elongation at break (%) | IPA | Fuel C |
| | | | | | | | Yield | Break | | Yield | Break | | | |
| Reference Example 4 | H-2 | S-2 | 50:5 0 | - | 0.00 | 0.0 | 16 | 23 | 310 | 37 | 32 | 210 | 1 | 2 |
| Example 13 | H-2 | S-2 | 50:5 0 | - | 9.00 | 1.0 | 36 | 28 | 50 | 54 | 46 | 20 | 5 | 5 |
| Reference Example 5 | H-3 | S-3 | 50:5 0 | - | 0.00 | 0.0 | 12 | 24 | 440 | 36 | 35 | 220 | 1 | 2 |
| Example 14 | H-3 | S-3 | 50:5 0 | - | 1.80 | 0.3 | 16 | 26 | 240 | 38 | 34 | 110 | 5 | 3 |
| Example 15 | H-3 | S-3 | 50:5 0 | - | 2.70 | 0.5 | 18 | 29 | 210 | 38 | 32 | 90 | 5 | 3 |
| Example 16 | H-3 | S-3 | 50:5 0 | - | 5.40 | 1.0 | 25 | 27 | 110 | 44 | 36 | 50 | 5 | 5 |
| Example 17 | H-3 | S-4 | 50:5 0 | - | 4.20 | 1.0 | 18 | 28 | 180 | 36 | 34 | 80 | 5 | 5 |
| Example 18 | H-3 | S-5 | 50:5 0 | - | 2.40 | 0.5 | 17 | 32 | 210 | 36 | 33 | 90 | 5 | 3 |
| Example 19 | H-4 | S-2 | 40:6 0 | - | 9.16 | 1.0 | 24 | 27 | 100 | 45 | 35 | 35 | 5 | 5 |
| Example 20 | H-4 | S-4 | 50:5 0 | - | 2.70 | 1.0 | 18 | 25 | 230 | 38 | 35 | 120 | 5 | 5 |
| Example 21 | H-5 | S-6 | 50:5 0 | - | 2.70 | 0.5 | 8 | 23 | 320 | 24 | 28 | 190 | 5 | 5 |
| Example 22 | H-2 | S-1 | 50:5 0 | - | 4.27 | 1.0 | 15 | 25 | 190 | 29 | 31 | 130 | 5 | 5 |
| Example 23 | H-1 | S-3 | 50:5 0 | - | 2.87 | 1.0 | 14 | 25 | 190 | 35 | 29 | 90 | 5 | 5 |
| Example 24 | H-2 | S-2 | 50:5 0 | L-220AL (25) | 11.78 | 1.0 | 9 | 27 | 220 | 26 | 37 | 160 | 4 | 5 |
| Example 25 | H-4 | S-4 | 50:5 0 | P-2010 (25) | 4.40 | 1.0 | 4 | 22 | 480 | 16 | 31 | 320 | 4 | 4 |
| Example 26 | H-4 | S-4 | 50:5 0 | C-2090 (25) | 4.40 | 1.0 | 7 | 24 | 380 | 22 | 32 | 240 | 4 | 4 |
| Example 27 | H-4 | S-4 | 50:5 0 | PPG (25) | 3.66 | 1.0 | 5 | 12 | 320 | 7 | 17 | 230 | 4 | 5 |

(continued)

| Test results | | | | | | | | | | | | | | |
|---|---|---|---|---|---|---|---|---|---|---|---|---|---|---|
| Examples | Hard | Soft | Ratio | Plasticizer (phr) | IPDI (phr) | NCO/OH | 25°C | | | 5°C | | | Solvent resistance | |
| | | | | | | | Tensile stress (MPa) | | Elongation at break (%) | Tensile stress (MPa) | | Elongation at break (%) | IPA | Fuel C |
| | | | | | | | Yield | Break | | Yield | Break | | | |
| Example 28 | H-3 | S-3 | 50:5 0 | 2EHDPP (10) | 5.58 | 1.0 | 8 | 24 | 230 | 22 | 34 | 180 | 5 | 5 |
| Comparative Example 2 | Copolymer | | | - | 9.00 | 1.0 | 30 | 22 | 50 | 51 | 51 | 10 | 5 | 5 |
| Comparative Example 3 | Copolymer | | | L-220AL (25) | 11.78 | 1.0 | 1 | 8 | 290 | 12 | 27 | 260 | 5 | 4 |

In Tables 1 to 5, the following materials were used.

Materials were manufactured by Wako Pure Chemical Industries, Ltd.

MMA: methyl methacrylate, BMA: n-butyl acrylate, BA: n-butyl acrylate, AA: acrylic acid, MAA: methacrylic acid, DMM: N,N-dimethylaminoethyl methacrylate, DMA: N,N-dimethylaminoethyl acrylate, HEMA: 2-hydroxyethyl methacrylate, 2EHDPP: 2-ethylhexyldiphenyl phosphate, PPG: polypropylene glycol (Mw: 3,000) and IPDI: isophorone diisocyanate

Materials manufactured by Dicel-UCB Company LTD.

EB-P36: acrylated benzophenone (Ebecryl™ P36) and EB8402: polyester urethane acrylate (Ebecryl™ EB8402)

Materials manufactured by 3M

ABP: 4-acryloyloxybenzophenone

Materials manufactured by Nippon Kayaku Co., Ltd.

UX-6101: polyether urethane acrylate (KAYARAD™ UX-6101), UX-8101: polyether urethane acrylate (KAYARAD™ UX-8101), R-551: ethylene oxide-modified (m + n = 4) bisphenol A diacrylate (KAYARAD™ R-551), TMPTA: trimethylolpropane triacrylate (KAYARAD™ TMPTA) and DPHA: dipentaerythritol hexaacrylate (KAYARAD™ DPHA) Materials manufactured by Shin-nakamura Chemical Corporation

U-200AX: poyester urethane acrylate (NK Oligo™ U-200AX) and UA-512T: 70 wt% toluene solution of polycarbonate urethane acrylate (NK Oligo™ UA-512T)

Materials manufactured by Osaka Organic Chemical Industry Ltd.

HEA: 2-hydroxyethyl acrylate and 4-HBA: 4-hydroxybutyl acrylate

Materials manufactured by Kuraray Co., Ltd.

P-2010: polyesterdiol comprising methylpentanediol-adipic acid (Mw: 2,000) and C-2090: polycarbonatediol comprising methylpentanediol-hexanol (Mw: 2,000)

Materials manufactured by Dicel Chemical Industries, Ltd.

L-220-AL: polycaprolactonediol (Mw: 2,000)

Reference Example 6 and Example 29

Using the acrylic films obtained in Reference Example 5 and Example 16, marking films were produced in the following manner. A solvent type acrylic adhesive (comprising isooctyl acrylate and acrylic acid in a mixing ratio of 90: 10 (% by weight) was applied on a release paper so that the resulting film has a thickness of 30 μm after drying, and dried, and then the coated release paper was laminated with each of the above acrylic films. Furthermore, GA3S (polyurethane transparent ink) was applied on the surface of the acrylic film by silk screen printing and then dried to form a 10 μm thick ink layer, and thus obtaining a marking film of the present invention.

The release paper was removed from the resulting marking film and the marking film was laminated on a melamine-coated plate, followed by standing at 25°C for 24 hours to obtain a laminated sample. This laminated sample was immersed in Fuel C, allowed to stand for 20 minutes and then taken out. After wiping off the solution, appearance was observed. The results are shown in Table 6. As is apparent from the results, the marking film of the present invention exhibit sufficient solvent resistance.

Table 6

| Evaluation of laminated sample | | |
|---|---|---|
| | Film sample | Change in appearance |
| Reference Example 6 | Reference Example 3 | Wrinkles were formed over all film |
| Example 29 | Example 4 | No change |

## Claims

**1.** A marking film comprising:

a (meth)acrylic film comprising a surface as a colorant receiving surface and a back surface opposite to the surface,
a colorant received on the surface of the (meth)acrylic film, and
an adhesive layer provided fixedly on the back surface of the (meth)acrylic film, which bonds the (meth)acrylic film to an adherend;
wherein the (meth)acrylic film is formed of:

(A-1) an acidic group-containing (meth)acrylic polymer having a glass transition temperature (Tg) of 0°C or higher obtained by copolymerizing a composition containing a monoethylenically unsaturated monomer as a main component and an unsaturated monomer having an acidic group,
(B-1) a basic group-containing (meth)acrylic polymer having a glass transition temperature (Tg) of 0°C or lower obtained by copolymerizing a composition containing a monoethylenically unsaturated monomer as a main component and an unsaturated monomer having a basic group, and
(C) a compound containing a radical generating group, which compound is selected from the group consisting of benzoin compounds, ketal compounds, acetophenone compounds, benzophenone compounds, thioxanthone compounds, and anthraquinone compounds.

**2.** The marking film according to claim 1, wherein said compound containing a radical generating group (C) is copolymerized to either or both of the components (A-1) and (B-1).

**3.** A marking film comprising:

a (meth)acrylic film comprising a surface as a colorant receiving surface and a back surface opposite to the surface,
a colorant received on the surface of the (meth)acrylic film, and
an adhesive layer provided fixedly on the back surface of the (meth)acrylic film, which bonds the (meth)acrylic film to an adherend;
wherein the (meth)acrylic film is formed of:

(A-2) an acidic group-containing (meth)acrylic polymer having a glass transition temperature (Tg) of 0°C or lower obtained by copolymerizing a composition containing a monoethylenically unsaturated monomer as a main component and an unsaturated monomer having an acidic group,
(B-2) a basic group-containing (meth)acrylic polymer having a glass transition temperature (Tg) of 0°C or higher obtained by copolymerizing a composition containing a monoethylenically unsaturated monomer as a main component and an unsaturated monomer having a basic group, and
(C) a compound containing a radical generating group, which compound is selected from the group consisting of benzoin compounds, ketal compounds, acetophenone compounds, benzophenone compounds, thioxanthone compounds, and anthraquinone compounds.

**4.** The marking film according to claim 3, wherein said compound containing a radical generating group (C) is copolymerized to either or both of the components (A-2) and (B-2).

**5.** The marking film according to any one of claims 1 to 4, wherein the film is crosslinked by radiating ultraviolet light to cause crosslinking of the polymer components.

**6.** A marking film comprising:

a (meth)acrylic film comprising a surface as a colorant receiving surface and a back surface opposite to the surface,
a colorant received on the surface of the (meth)acrylic film, and
an adhesive layer provided fixedly on the back surface of the (meth)acrylic film, which bonds the (meth)acrylic film to an adherend;
wherein the (meth)acrylic film is formed of:

(A-1) an acidic group-containing (meth)acrylic polymer having a glass transition temperature (Tg) of 0°C or higher obtained by copolymerizing a composition containing a monoethylenically unsaturated monomer as a main component and an unsaturated monomer having an acidic group,
(B-1) a basic group-containing (meth)acrylic polymer having a glass transition temperature (Tg) of 0°C or lower obtained by copolymerizing a composition containing a monoethylenically unsaturated monomer as a main component and an unsaturated monomer having a basic group, and
(D) a polyisocyanate, wherein either or both of the components (A-1) and (B-1) have a hydroxyl group.

**7.** A marking film comprising:

a (meth)acrylic film comprising a surface as a colorant receiving surface and a back surface opposite to the surface,
a colorant received on the surface of the (meth)acrylic film, and
an adhesive layer provided fixedly on the back surface of the (meth)acrylic film, which bonds the (meth)acrylic film to an adherend;
wherein the (meth)acrylic film is formed of:

(A-2) an acidic group-containing (meth)acrylic polymer having a glass transition temperature (Tg) of 0°C or lower obtained by copolymerizing a composition containing a monoethylenically unsaturated monomer as a main component and an unsaturated monomer having an acidic group,
(B-2) a basic group-containing (meth)acrylic polymer having a glass transition temperature (Tg) of 0°C or higher obtained by copolymerizing a composition containing a monoethylenically unsaturated monomer as a main component and an unsaturated monomer having a basic group, and
(D) a polyisocyanate, wherein either or both of the components (A-2) and (B-2) have a hydroxyl group.

**8.** The marking film according to any one of claims 1 to 7, wherein the unsaturated monomer having an acidic group is an ethylenically unsaturated carboxylic acid.

**9.** The marking film according to any one of claims 1 to 8, wherein the basic group is an amino group.

**10.** The marking film according to any one of claims 1 to 9, wherein the monoethylenically unsaturated monomer is an alkyl (meth)acrylate ester and the alkyl group has 1 to 12 carbon atoms on average.

**11.** A receptor sheet used to produce the marking film according to any one of claims 1 to 10 by electrostatic toner printing, comprising the (meth)acrylic film as defined in any one of claims 1 to 10, and an adhesive layer provided fixedly on the back surface of the (meth)acrylic film.

**Patentansprüche**

**1.** Markierungsfolie, umfassend:

eine (Meth)acrylfolie, umfassend eine Oberfläche als Farbmittelempfangsoberfläche und eine der Oberfläche gegenüberliegende rückseitige Oberfläche,
ein auf der Oberfläche der (Meth)acrylfolie empfangenes Farbmittel und
eine Klebstoffschicht, die auf der rückseitigen Oberfläche der (Meth)-acrylfolie fixiert vorgesehen ist und die (Meth)acrylfolie mit einem Klebesubstrat verbindet;
wobei die (Meth)acrylfolie aus:

(A-1) einem durch Copolymerisation einer ein monoethylenisch ungesättigtes Monomer als Hauptkomponente und ein ungesättigtes Monomer mit einer sauren Gruppe enthaltenden Zusammensetzung erhaltenen saure Gruppen enthaltenden (Meth)acrylpolymer mit einer Glasübergangstemperatur von 0°C oder mehr,
(B-1) einem durch Copolymerisation einer ein monoethylenisch ungesättigtes Monomer als Hauptkomponente und ein ungesättigtes Monomer mit einer basischen Gruppe enthaltenden Zusammensetzung erhaltenen basische Gruppen enthaltenden (Meth)acrylpolymer mit einer Glasübergangstemperatur von 0°C oder weniger und
(C) einer Verbindung mit einer radikalbildenden Gruppe, die aus der Gruppe bestehend aus Benzoinverbindungen, Ketalverbindungen, Acetophenonverbindungen, Benzophenonverbindungen, Thioxanthonverbindungen und Anthrachinonverbindungen ausgewählt ist,

gebildet ist.

2. Markierungsfolie nach Anspruch 1, wobei die Verbindung mit einer radikalbildenden Gruppe (C) mit einer oder beiden der Komponenten (A-1) und (B-1) copolymerisiert ist.

3. Markierungsfolie, umfassend:

eine (Meth)acrylfolie, umfassend eine Oberfläche als Farbmittelempfangsoberfläche und eine der Oberfläche gegenüberliegende rückseitige Oberfläche,
ein auf der Oberfläche der (Meth)acrylfolie empfangenes Farbmittel und
eine Klebstoffschicht, die auf der rückseitigen Oberfläche der (Meth)-acrylfolie fixiert vorgesehen ist und die (Meth)acrylfolie mit einem Klebesubstrat verbindet;
wobei die (Meth)acrylfolie aus:

(A-2) einem durch Copolymerisation einer ein monoethylenisch ungesättigtes Monomer als Hauptkomponente und ein ungesättigtes Monomer mit einer sauren Gruppe enthaltenden Zusammensetzung erhaltenen saure Gruppen enthaltenden (Meth)acrylpolymer mit einer Glasübergangstemperatur von 0°C oder weniger,
(B-2) einem durch Copolymerisation einer ein monoethylenisch ungesättigtes Monomer als Hauptkomponente und ein ungesättigtes Monomer mit einer basischen Gruppe enthaltenden Zusammensetzung erhaltenen basische Gruppen enthaltenden (Meth)acrylpolymer mit einer Glasübergangstemperatur von 0°C oder mehr und
(C) einer Verbindung mit einer radikalbildenden Gruppe, die aus der Gruppe bestehend aus Benzoinverbindungen, Ketalverbindungen, Acetophenonverbindungen, Benzophenonverbindungen, Thioxanthonverbindungen und Anthrachinonverbindungen ausgewählt ist,

gebildet ist.

4. Markierungsfolie nach Anspruch 3, wobei die Verbindung mit einer radikalbildenden Gruppe (C) mit einer oder beiden der Komponenten (A-2) und (B-2) copolymerisiert ist.

5. Markierungsfolie nach einem der Ansprüche 1 bis 4, wobei die Folie durch Bestrahlung mit ultraviolettem Licht zur Bewirkung von Vernetzung der Polymerkomponenten vernetzt ist.

6. Markierungsfolie, umfassend:

eine (Meth)acrylfolie, umfassend eine Oberfläche als Farbmittelempfangsoberfläche und eine der Oberfläche gegenüberliegende rückseitige Oberfläche,
ein auf der Oberfläche der (Meth)acrylfolie empfangenes Farbmittel und
eine Klebstoffschicht, die auf der rückseitigen Oberfläche der (Meth)-acrylfolie fixiert vorgesehen ist und die (Meth)acrylfolie mit einem Klebesubstrat verbindet;
wobei die (Meth)acrylfolie aus:

(A-1) einem durch Copolymerisation einer ein monoethylenisch ungesättigtes Monomer als Hauptkomponente und ein ungesättigtes Monomer mit einer sauren Gruppe enthaltenden Zusammensetzung erhaltenen saure Gruppen enthaltenden (Meth)acrylpolymer mit einer Glasübergangstemperatur von 0°C oder mehr,
(B-1) einem durch Copolymerisation einer ein monoethylenisch ungesättigtes Monomer als Hauptkomponente und ein ungesättigtes Monomer mit einer basischen Gruppe enthaltenden Zusammensetzung erhaltenen basische Gruppen enthaltenden (Meth)acrylpolymer mit einer Glasübergangstemperatur von 0°C oder weniger und
(D) einem Polyisocyanat

gebildet ist, wobei eine oder beide der Komponenten (A-1) und (B-1) eine Hydroxylgruppe aufweisen.

**7.** Markierungsfolie, umfassend:

eine (Meth)acrylfolie, umfassend eine Oberfläche als Farbmittelempfangsoberfläche und eine der Oberfläche gegenüberliegende rückseitige Oberfläche,
ein auf der Oberfläche der (Meth)acrylfolie empfangenes Farbmittel und
eine Klebstoffschicht, die auf der rückseitigen Oberfläche der (Meth)-acrylfolie fixiert vorgesehen ist und die (Meth)acrylfolie mit einem Klebesubstrat verbindet;
wobei die (Meth)acrylfolie aus:

(A-2) einem durch Copolymerisation einer ein monoethylenisch ungesättigtes Monomer als Hauptkomponente und ein ungesättigtes Monomer mit einer sauren Gruppe enthaltenden Zusammensetzung erhaltenen saure Gruppen enthaltenden (Meth)acrylpolymer mit einer Glasübergangstemperatur von 0°C oder weniger,
(B-2) einem durch Copolymerisation einer ein monoethylenisch ungesättigtes Monomer als Hauptkomponente und ein ungesättigtes Monomer mit einer basischen Gruppe enthaltenden Zusammensetzung erhaltenen basische Gruppen enthaltenden (Meth)acrylpolymer mit einer Glasübergangstemperatur von 0°C oder mehr und
(D) einem Polyisocyanat

gebildet ist, wobei eine oder beide der Komponenten (A-2) und (B-2) eine Hydroxylgruppe aufweisen.

**8.** Markierungsfolie nach einem der Ansprüche 1 bis 7, wobei es sich bei dem ungesättigten Monomer mit einer sauren Gruppe um eine ethylenisch ungesättigte Carbonsäure handelt.

**9.** Markierungsfolie nach einem der Ansprüche 1 bis 8, wobei es sich bei der basischen Gruppe um eine Aminogruppe handelt.

**10.** Markierungsfolie nach einem der Ansprüche 1 bis 9, wobei es sich bei dem monoethylenisch ungesättigten Monomer um einen Alkyl(meth)acrylatester handelt und die Alkylgruppe durchschnittlich 1 bis 12 Kohlenstoffatome aufweist.

**11.** Zur Herstellung der Markierungsfolie nach einem der Ansprüche 1 bis 10 durch elektrostatischen Tonerdruck verwendetes Empfangsblatt, umfassend die (Meth)acrylfolie gemäß einem der Ansprüche 1 bis 10 und eine Klebstoffschicht, die auf der rückseitigen Oberfläche der (Meth)acrylfolie fixiert vorgesehen ist.

## Revendications

**1.** Film de marquage comprenant :

un film (méth)acrylique comprenant une surface sous la forme d'une surface réceptrice de colorant et une surface postérieure opposée à la surface,
un colorant reçu sur la surface du film (méth)acrylique, et
une couche adhésive fixée à la surface postérieure du film (méth)acrylique,
laquelle lie le film (méth)acrylique à un support ;

dans lequel le film (méth)acrylique est formé de :

(A-1) un polymère (méth)acrylique contenant un groupe acide ayant une température de transition vitreuse (Tg) de 0 °C ou supérieure obtenu par copolymérisation d'une composition contenant un monomère à insaturation monoéthylénique comme composant principal et un monomère insaturé contenant un groupe acide,
(B-1) un polymère (méth)acrylique contenant un groupe basique ayant une température de transition vitreuse (Tg) de 0 °C ou inférieure obtenu par copolymérisation d'une composition contenant un monomère à insaturation monoéthylénique comme composant principal et un monomère insaturé contenant un groupe basique, et
(C) un composé contenant un groupe générateur de radicaux libres, lequel composé est sélectionné dans le groupe constitué de composés de benzoïne, de composés cétals, de composés d'acétophénone, de composés de benzophénone, de composés de thioxanthone, et de composés d'anthraquinone.

2. Film de marquage selon la revendication 1, dans lequel ledit composé contenant un groupe générateur de radicaux libres (C) est copolymérisé pour produire l'un ou l'autre des composants (A-1) et (B-1) ou ces deux composants.

3. Film de marquage comprenant :

un film (méth)acrylique comprenant une surface sous la forme d'une surface réceptrice de colorant et une surface postérieure opposée à la surface,
un colorant reçu sur la surface du film (méth)acrylique, et
une couche adhésive fixée à la surface postérieure du film (méth)acrylique,
laquelle lie le film (méth)acrylique à un support ;

dans lequel le film (méth)acrylique est formé de :

(A-2) un polymère (méth)acrylique contenant un groupe acide ayant une température de transition vitreuse (Tg) de 0 °C ou inférieure obtenu par copolymérisation d'une composition contenant un monomère à insaturation monoéthylénique comme composant principal et un monomère insaturé contenant un groupe acide,
(B-2) un polymère (méth)acrylique contenant un groupe basique ayant une température de transition vitreuse (Tg) de 0 °C ou supérieure obtenu par copolymérisation d'une composition contenant un monomère à insaturation monoéthylénique comme composant principal et un monomère insaturé contenant un groupe basique, et
(C) un composé contenant un groupe générateur de radicaux libres, lequel composé est sélectionné dans le groupe constitué de composés de benzoïne, de composés cétals, de composés d'acétophénone, de composés de benzophénone, de composés de thioxanthone, et de composés d'anthraquinone.

4. Film de marquage selon la revendication 3, dans lequel ledit composé contenant un groupe générateur de radicaux libres (C) est copolymérisé pour produire l'un ou l'autre des composants (A-2) et (B-2) ou ces deux composants.

5. Film de marquage selon l'une quelconque des revendications 1 à 4, dans lequel le film est réticulé par irradiation par la lumière ultraviolette pour causer la réticulation des composants polymères.

6. Film de marquage comprenant :

un film (méth)acrylique comprenant une surface sous la forme d'une surface réceptrice de colorant et une surface postérieure opposée à la surface,
un colorant reçu sur la surface du film (méth)acrylique, et
une couche adhésive fixée à la surface postérieure du film (méth)acrylique,
laquelle lie le film (méth)acrylique à un support ;

dans lequel le film (méth)acrylique est formé de :

(A-1) un polymère (méth)acrylique contenant un groupe acide ayant une température de transition vitreuse (Tg) de 0 °C ou supérieure obtenu par copolymérisation d'une composition contenant un monomère à insaturation monoéthylénique comme composant principal et un monomère insaturé contenant un groupe acide,
(B-1) un polymère (méth)acrylique contenant un groupe basique ayant une température de transition vitreuse (Tg) de 0 °C ou inférieure obtenu par copolymérisation d'une composition contenant un monomère à insaturation monoéthylénique comme composant principal et un monomère insaturé contenant un groupe basique, et
(D) un polyisocyanate, dans lequel l'un ou l'autre des composants (A-1) et (B-1) ou ces deux composants contiennent un groupe hydroxyle.

7. Film de marquage comprenant :

un film (méth)acrylique comprenant une surface sous la forme d'une surface réceptrice de colorant et une surface postérieure opposée à la surface,

un colorant reçu sur la surface du film (méth)acrylique, et
une couche adhésive fixée à la surface postérieure du film (méth)acrylique,
laquelle lie le film (méth)acrylique à un support ;

dans lequel le film (méth)acrylique est formé de :

(A-2) un polymère (méth)acrylique contenant un groupe acide ayant une température de transition vitreuse (Tg) de 0 °C ou inférieure obtenu par copolymérisation d'une composition contenant un monomère à insaturation monoéthylénique comme composant principal et un monomère insaturé contenant un groupe acide,
(B-2) un polymère (méth)acrylique contenant un groupe basique ayant une température de transition vitreuse (Tg) de 0 °C ou supérieure obtenu par copolymérisation d'une composition contenant un monomère à insaturation monoéthylénique comme composant principal et un monomère insaturé contenant un groupe basique, et
(D) un polyisocyanate, dans lequel l'un ou l'autre des composants (A-2) et (B-2) ou ces deux composants contiennent un groupe hydroxyle.

**8.** Film de marquage selon l'une quelconque des revendications 1 à 7, dans lequel le monomère insaturé contenant un groupe acide est un acide carboxylique à insaturation éthylénique.

**9.** Film de marquage selon l'une quelconque des revendications 1 à 8, dans lequel le groupe basique est un groupe amino.

**10.** Film de marquage selon l'une quelconque des revendications 1 à 9, dans lequel le monomère à insaturation monoéthylénique est un ester d'alkyl(méth)acrylate et le groupe alkyle contient de 1 à 12 atomes de carbone en moyenne.

**11.** Feuille réceptrice utilisée pour produire le film de marquage selon l'une quelconque des revendications 1 à 10 par impression avec un toner électrostatique, comprenant le film (méth)acrylique selon l'une quelconque des revendications 1 à 10, et une couche adhésive fixée à la surface postérieure du film (méth)acrylique.

100
3
31
2
30
5
11
1
4
12
41

*Fig. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60017406 A
- JP 60030698 A
- JP 10310754 A
- WO 2000509089 A
- JP 62153376 A
- JP 58050164 A
- JP 2001213932 A